(19) Europäisches Patentamt
European Patent Office
Office européen des brevets

(11) **EP 4 501 141 A1**

(12) **EUROPEAN PATENT APPLICATION**
published in accordance with Art. 153(4) EPC

(43) Date of publication:
**05.02.2025 Bulletin 2025/06**

(21) Application number: **22935223.2**

(22) Date of filing: **30.03.2022**

(51) International Patent Classification (IPC):
**A24D 1/20** (2020.01)

(52) Cooperative Patent Classification (CPC):
**A24D 1/20**

(86) International application number:
**PCT/JP2022/015864**

(87) International publication number:
**WO 2023/188077 (05.10.2023 Gazette 2023/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Japan Tobacco Inc.**
**Tokyo 105-6927 (JP)**

(72) Inventors:
• **KATO, Katsuo**
**Tokyo 130-8603 (JP)**
• **ARAE, Kazumasa**
**Tokyo 130-8603 (JP)**
• **SHIBUICHI, Hiroshi**
**Tokyo 130-8603 (JP)**

(74) Representative: **Hoffmann Eitle**
**Patent- und Rechtsanwälte PartmbB**
**Arabellastraße 30**
**81925 München (DE)**

(54) **FLAVOURED ROD USED IN NON-COMBUSTION HEATING-TYPE FLAVOUR INHALER**

(57) A flavoured rod (100) is used in a non-combustion heating-type flavour inhaler (200). The flavoured rod (100) comprises: a filling rod (28) of a reduced diameter, obtained by bundling and rolling flavoured sheets (1) in the width direction X of said rod which intersects the length direction Y thereof; and rolling paper (30) wrapped around the filling rod (28). The flavoured sheets (1) include: a sheet (2) formed of fibres (6); an adhesive added to one side (A) of the sheet (2); and particles (4) supplied to the other side (B) of the sheet (2). The flavoured sheets are formed of a non-woven fabric obtained through an airlaid process in which the sheet (2) is formed, the adhesive is added, and the particles (4) are supplied.

FIG. 1

EP 4 501 141 A1

## Description

Technical Field

The present invention relates to a flavor rod for use in a non-combustion-heating-type flavor inhalation article.

Background Art

PTL 1 discloses a sheet of homogenized tobacco material manufactured by forming a slurry including a blended tobacco powder mixture, and casting the slurry on a support surface. PTL 2 discloses a reconstituted tobacco sheet manufactured through a process including: extracting water-soluble products of tobacco; separating the water-soluble products from tobacco fibers; refining the tobacco fibers; passing the tobacco fibers into a papermaking machine to form a base sheet; and incorporating concentrated water-soluble products into the base sheet. PTL 3 discloses a sheet of reconstituted tobacco manufactured by rolling of a mixture containing shredded tobacco.

PTL 4 discloses a tobacco rod filled with a crimped and folded tobacco sheet containing homogenized tobacco particles and susceptor particles. PTL 5 discloses a tobacco rod obtained through a process including: mixing a ground tobacco raw material with, for example, an aerosol-source material and water to form a slurry; forming a laminar tobacco sheet from the slurry; finely cutting the tobacco sheet into a plurality of tobacco strands; and filling the tobacco rod with the tobacco strands that are combined in the same direction or randomly.

Citation List

Patent Literature

[0004]

　　　PTL 1: Japanese Patent No. 6929300
　　　PTL 2: Japanese Patent No. 6946306
　　　PTL 3: International Publication No. 2021/181327
　　　PTL 4: International Publication No. 2015/177252
　　　PTL 5: Japanese Unexamined Patent Application Publication (Translation of PCT Application) No. 2021-519604

Summary of Invention

Technical Problem

The tobacco sheet described in each of PTLs 1 to 5 is formed through steps such as casting of a slurry, making of paper from fibers, or rolling or crimping of a material. The sheet formed in this way thus has a high density, a small thickness, and a low air-permeability. If a flavor rod is manufactured by being filled with such a tobacco sheet, in other words, a flavor sheet impregnated with a flavor other than tobacco, the amount of the flavor sheet to be packed into the flavor rod needs to be increased. As a result, a flavor segment obtained by cutting the flavor rod, and therefore a flavor inhalation article (to be referred to simply as "article" hereinafter) including the flavor segment increase in draw resistance.

The increased draw resistance of the article tends to result in decreased airflow through the flavor segment, and consequently decreased amount of inhalation by the user when the user inhales on the article. This makes it impossible to efficiently volatilize flavor components contained in the flavor sheet, and efficiently generate an aerosol containing the flavor components. Further, if the flavor rod has a high draw resistance, the airflow through the flavor segment decreases. As a result, heated and volatilized flavor components are adsorbed and filtered by the flavor rod itself.

Consequently, the amount of flavor components delivered to a downstream portion of the flavor rod in the direction of airflow decreases. This results in a decreased amount of flavor components that can be finally inhaled by the user. In particular, non-combustion-heating-type flavor inhalation articles are generally heated to a lower temperature than are combustion-heating-type flavor inhalation articles. This leads to a smaller amount of flavor components to be volatilized, and also a smaller amount of flavor components inhalable by the user. This in turn makes it difficult to supply a satisfying flavor to the user.

If, as with the tobacco rods described in PTLs 4 and 5, a flavor rod is formed by being filled with a thin flavor sheet that is folded or lapped over itself, voids tend to form between the flavor sheets. This inevitably results in increased airflow through such voids during inhalation on the article. Since volatilization and aerosolization of flavor components contained in a flavor sheet mainly take place in such voids with an increased airflow therethrough, the presence of such voids hinders efficient volatilization of the flavor components and efficient aerosolization of the flavor components.

If a flavor rod is formed by being filled with a thin flavor sheet that is folded or lapped over itself, variations occur in the degree of packing of the flavor sheet in the flavor rod, and variations also tend to occur in the size or shape of voids. Such variations in the size or shape of voids lead to fluctuations in the amount of flavor components to be volatilized from the flavor sheet, and in the amount of aerosol generation. The presence of voids, and the variations in the degree of packing of the flavor sheet make it difficult to supply a consistent flavor to the user.

In particular, in the case of the tobacco rod described in PTL 4, such variations in the degree of packing of the flavor sheet may also cause variations in the manner of contact between the tobacco particles and the susceptor particles. As a result, variations occur in the heating distribution of the tobacco particles. This leads to pronounced fluctuations in the amount of volatilization of flavor components and in the amount of aerosol generation. This in turn makes it even more difficult to supply a consistent flavor to the user.

The present invention is directed to addressing the problems mentioned above. It is accordingly an object of the present invention to provide a flavor rod that is used for a non-combustion-heating-type flavor inhalation article, and that makes it possible to supply flavor components to the user efficiently and in a consistent amount.

Solution to Problem

A flavor rod for use in a non-combustion-heating-type flavor inhalation article includes a filler rod, and a wrapping paper. The filler rod is formed from a flavor sheet that is gathered and reduced in size in a width direction transverse to a longitudinal direction of the flavor sheet. The wrapping paper is wrapped around the filler rod. The flavor sheet includes a sheet, an adhesive, and particles. The sheet is formed from fibers. The adhesive is added to a side of the sheet. The particles are supplied to an other side of the sheet. The flavor sheet is formed from a nonwoven fabric through formation of the sheet, addition of the adhesive, and supply of the particles that are performed by an airlaid process.

Advantageous Effects of Invention

The flavor inhalation article employing the flavor rod mentioned above makes it possible to supply flavor components to the user efficiently and in a consistent amount.

Brief Description of Drawings

[Fig. 1] Fig. 1 is a cross-sectional view of a flavor sheet.
[Fig. 2] Fig. 2 schematically illustrates a manufacturing apparatus for the flavor sheet.
[Fig. 3] Fig. 3 is a flowchart illustrating a manufacturing method for the flavor sheet.
[Fig. 4] Fig. 4 is a conceptual illustration of one implementation of a flavor rod.
[Fig. 5] Fig. 5 is a conceptual illustration of another implementation of the flavor rod.
[Fig. 6] Fig. 6 is a conceptual illustration for explaining the volumetric filling ratio of a filler rod.
[Fig. 7] Fig. 7 is a cross-sectional view of one implementation of a flavor inhalation article.

Description of Embodiments

1. Flavor Sheet

A flavor sheet includes a sheet, an adhesive, and particles. The sheet is formed from fibers. The adhesive is added to one side of the sheet. The particles are supplied to the other side of the sheet. The flavor sheet is formed from a nonwoven fabric through formation of the sheet, addition of the adhesive, and supply of the particles that have been performed by an airlaid process. The flavor sheet is intended for use in non-combustion-heating-type flavor inhalation articles. In this regard, there are various ways as to how the flavor sheet is formed, and how the flavor sheet is positioned in such an article.

For example, the flavor sheet can be folded or randomly gathered, and then wrapped with a wrapping paper (a wrapper) to form a flavor rod. The flavor rod thus obtained can be cut to form a flavor segment, and the flavor segment can be combined with another segment to form a rod-shaped article.

(1) Particles

The particles to be included in the sheet are formed into a size that allows the particles to be easily embedded within the sheet. More specifically, the particles preferably have a particle size of 14 mesh to 500 mesh as measured with the standard sieve (ASTM E11). More preferably, the particle size ranges from 14 mesh to 70 mesh, in which case the particles are embedded within the sheet while being dispersed in the gaps between the fibers that make up the sheet. Further, when the particles are formed with a particle size of 70 mesh to 500 mesh, the particles adhere to the surfaces of the fibers that make up the sheet, and thus become embedded within the sheet. In supplying the sheet with the particles having a particle size of 70 mesh to 500 mesh, the particles may be applied onto the sheet surface in the form of a paste or liquid suspension by being dispersed within a liquid.

The particles each represent a component-releasing agent for flavor components. A component-releasing agent refers to a material containing a given substance, and a carrier that carries the substance in a manner that allows the substance to be released. Alternatively, a component-releasing agent refers to a material that releases a substance by itself. As for the former case, examples of the substance include flavoring agents such as menthol, and tobacco extracts serving as flavor components. Examples of the carrier include inclusion compounds such as cyclodextrin, and porous materials such as calcium carbonate and alumina.

As for the latter case, examples of the particles include ground mint leaves obtained by grinding mint leaves, and ground tobacco obtained by grinding tobacco plants. The mint leaf particles release, for example, menthol. The tobacco particles release, for example, flavor. All of the particles may be component-releasing agents. Alternatively, a subset of all of the particles may be component-releasing agents. In the latter case, the lower limit of the total amount of component-releasing agents within all the particles is preferably greater than or equal to 80% by weight, more preferably greater than or equal to 90% by weight, and further preferably greater than or equal to 95% by weight. The upper limit of the total amount is preferably less than or equal to 99% by weight, and more preferably less than or equal to 98% by weight.

More specifically, the amount of flavor components to be incorporated into the sheet is adjusted in accordance with the target quality of the article. In some cases, in incorporating a predetermined amount of particles into a sheet of a predetermined area, it is difficult, by simply increasing or decreasing the amount of particles, to adjust conditions used for a manufacturing apparatus for the article. Accordingly, from the viewpoint of stable manufacture of the article, it is preferable to prepare the particles in such a way that particles that do not release components (bulking particles) and component-releasing particles are mixed together, and the ratio between these two types of particles is adjusted so that the total amount of the particles to be supplied does not change.

(2) Fibers

The fibers to be used are not particularly limited as long as such fibers allow formation of a sheet matrix. Examples of such fibers can include synthetic fibers or semi-synthetic fibers made from raw materials such as cellulose acetate, PP, PE, PET, or polylactic acid. Other examples can include natural fibers such as plant fibers made from cellulose or other raw materials. In this regard, plant-based natural fibers are preferred from the viewpoint of environmental load reduction.

Although the length of the fibers is not particularly limited, relatively short fibers are preferred from the viewpoint of formation of a sheet matrix, and the length of such fibers is preferably less than or equal to 5 mm. Although the fineness of the fibers is not particularly limited, if the fibers are synthetic fibers or semi-synthetic fibers, the fibers have a fineness in terms of filament denier of preferably 1 to 30 (denier/filament), and more preferably 1 to 10 (denier/filament).

In the case of natural fibers, coarseness can be used as an index of thickness and length. From the viewpoint of the ease of achieving a draw resistance suitable for inhalation, the coarseness is preferably 0.15 to 0.25 mg/m, more preferably 0.16 to 0.24 mg/m, and further preferably 0.18 to 0.22 mg/m. The coarseness is measured in conformity with JIS P 8120:1998.

When synthetic fibers or semi-synthetic fibers are to be used, the cross-sectional shape of the fibers is not particularly limited but is preferably an R-shape or a Y-shape, and more preferably a Y-shape from the viewpoint of cost. A plasticizer or a binder can be used to bond the points of contact between the fibers to thereby increase sheet strength during sheet formation. When natural fibers such as cellulose are to be used, a water-soluble binder such as starch, modified starch, modified cellulose, PVA, or PVAc can be used alone, or a mixture of a plurality of kinds of such water-soluble binders can be used. Alternatively, for example, latex can be also used.

When acetate fibers are to be used as the fibers, a binder for the natural fibers mentioned above can be used, or a plasticizer (triacetin) capable of dissolving cellulose acetate can be used as well. Among the fibers that can be used, plant-based natural fibers are preferred for their low environmental load as compared with synthetic fibers and semi-synthetic fibers, and wood pulp fibers are particularly preferred from the viewpoint of their superior heat resistance. In this case, from the viewpoint of suitability for manufacture in processing the sheet into a flavor sheet or from the viewpoint of hardness after the sheet is formed into a flavor sheet, the weight of the wood pulp fibers contained per unit area of the sheet is preferably 25 to 50 g/m2.

(3) Adhesive

As the adhesive, a known adhesive can be used, examples of which include starch-based adhesives, modified starch-based adhesives, modified cellulose-based adhesives such as CMC, HPC, or PPMC, polysaccharide adhesives such as alginate, carageenan, or guar gum, and polymer adhesives such as polyvinyl alcohol. Among these, the adhesive to be used is preferably selected from the group consisting of polyvinyl alcohol, a vinyl acetate-acrylic copolymer, and a mixture thereof from the viewpoint of having a relatively small effect on the flavor of the article, having superior water resistance, and having superior heat resistance. The weight of the adhesive (weight in terms of solid content) is preferably 4 to 40 g/m2 per unit area of the sheet. An excessively large amount of the adhesive is disadvantageous from the economical viewpoint, and its potential effect on flavor is also a concern. An excessively small amount of the adhesive results in a reduced number of adhesion points between fibers, which may cause problems such as the fibers coming apart or the inability to maintain the tensile strength of the sheet.

(4) Distribution Ratio of Particles

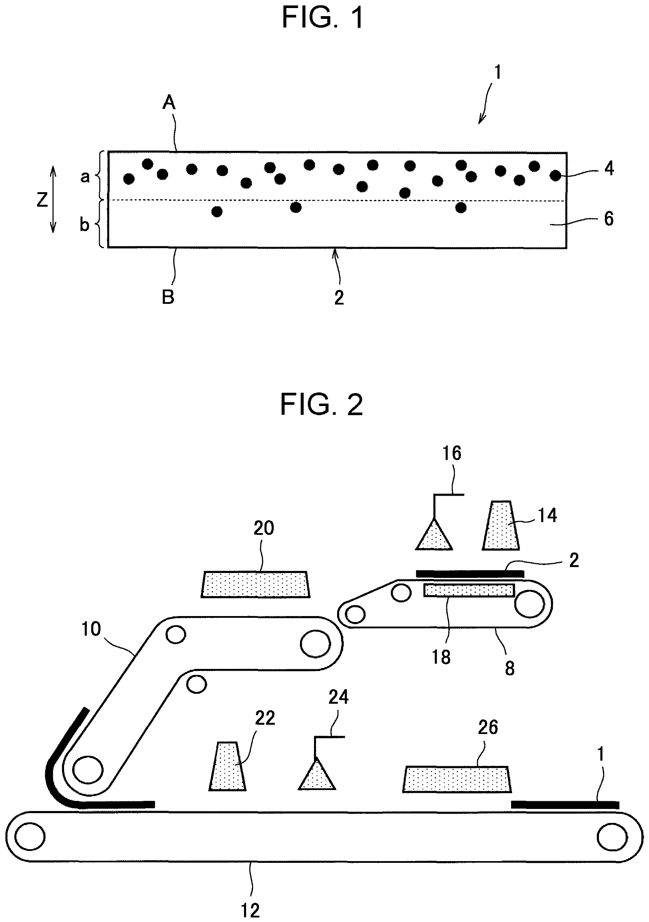

Fig. 1 is a cross-sectional view of a flavor sheet. In Fig. 1, reference sign 1 denotes a flavor sheet, reference sign 2 denotes a sheet serving as a base, reference sign 4 denotes particles, reference sign 6 denotes fibers, reference sign "A" denotes one side of the flavor sheet 1, reference sign "a" denotes a region of the sheet 2 extending from the center of the sheet 2 in a thickness direction Z to the one side A, reference sign "B" denotes the other side of the flavor sheet 1, and reference sign "b" denotes a region of the sheet 2 extending from the center of the sheet 2 in the thickness direction Z to the other side B. The particles 4 are distributed in the flavor sheet 1 with a predetermined distribution ratio. A distribution ratio CA of the particles 4 in the region "a" of the flavor sheet 1, and a distribution ratio CB of the particles 4 in the region "b" of the flavor sheet 1 are defined as follows.

CA = weight of particles existing in region "a" / total weight of particles CB = weight of particles existing in region "b" / total weight of particles

The particles 4 are distributed in the sheet 2 in such a way that the following condition is met: CA > CB. That is, more particles 4 are distributed in the region "a" including the one side A of the sheet 2. The ratio CA:CB is preferably 60 to 100 : 0 to 40, and more preferably 70 to 90 : 10 to 30. The total weight of the particles 4 is preferably 7 to 80 g/m2, and more preferably 10 to 40 g/m2 per unit area of the flavor sheet 1. A weight of the particles less than the lower limit value makes it impossible for the particles 4 to adequately exhibit their function, whereas a weight of the particles 4 exceeding the upper limit value is disadvantageous from the economical viewpoint.

The distribution ratio of the particles 4 near the surface layer of the flavor sheet 1 is preferably low. This is because the presence of many particles 4 near the surface layer of the flavor sheet 1 may cause damage to the manufacturing apparatus (described later) during manufacture. From such a viewpoint, distribution ratios CAs and CBs of the particles 4 near the surface layer are defined as follows.

CAs = weight of particles existing within region of 5% in thickness direction from one surface (side A) / total weight of particles CBs = weight of particles existing within region of 5% in thickness direction from other surface (side B) / total weight of particles

The distribution ratio CAs is preferably 0 to 10, more preferably 0 to 5, and further preferably 0 to 3. The distribution ratio CBs is preferably 0 to 5, more preferably 0 to 3, and further preferably 0 to 1. From the viewpoint of protection of the manufacturing apparatus, still more preferably, the distribution ratios CAs and CBs are both zero, and if neither of the distribution ratios CAs and CBs is zero, the particles 4 are preferably embedded within the flavor sheet 1.

These distribution ratios can be determined by either of the following methods: performing image analysis on a cross-section of the flavor sheet 1; and splitting the flavor sheet 1 along a plane parallel to the major face of the flavor sheet 1 at the center in the thickness direction Z or at the 5% position from the surface, and measuring the respective weights of the particles 4 and the sheet 2. The former method is preferred from the viewpoint of simplicity. Since the distribution ratio of the particles 4 in the flavor sheet 1 is uniform in the plane direction, according to the former method, the results of image analysis performed on one cross-section of the flavor sheet 1 may be regarded as representative of the distribution ratio of the particles 4 for the entire sheet.

(5) Shape or Other Features of Flavor Sheet

The shape of the flavor sheet 1 is tailored as appropriate to suit the intended application. For example, if the flavor sheet 1 is to be formed into a flavor rod for use in a cylindrical article with a diameter of 24 mm and a height of 27 mm, the flavor sheet 1 is shaped to have a length of 27 mm, a width of 50 to 150 mm, and a thickness of 0.5 to 3.0 mm. When manufactured through an airlaid process described later, the flavor sheet 1 has an increased thickness and an increased air permeability as compared with conventional flavor sheets. The thickness of the flavor sheet 1 can be measured by performing optical measurement such as image analysis on the sheet cross-section. Alternatively, the thickness can be measured by using a paper and board thickness measurement method specified in JIS P 8118:2014.

Although the apparent density of the flavor sheet 1 is not limited, in one implementation, the apparent density is 30 to 200 g/m3. The apparent density as referred to herein can be calculated by dividing the basis weight of the sheet including all of the structural elements of the sheet including the fibers 6, the adhesive, and the particles 4, by the volume of the sheet. The flavor sheet 1 has an air permeability of 1000 l/m$^2$/s to 50000 l/m$^2$/s, which is high compared with those of conventional flavor sheets. The air permeability of the flavor sheet 1 is measured by using a measurement method in conformity with ISO 9073-15.

2. Manufacturing Method for Flavor Sheet

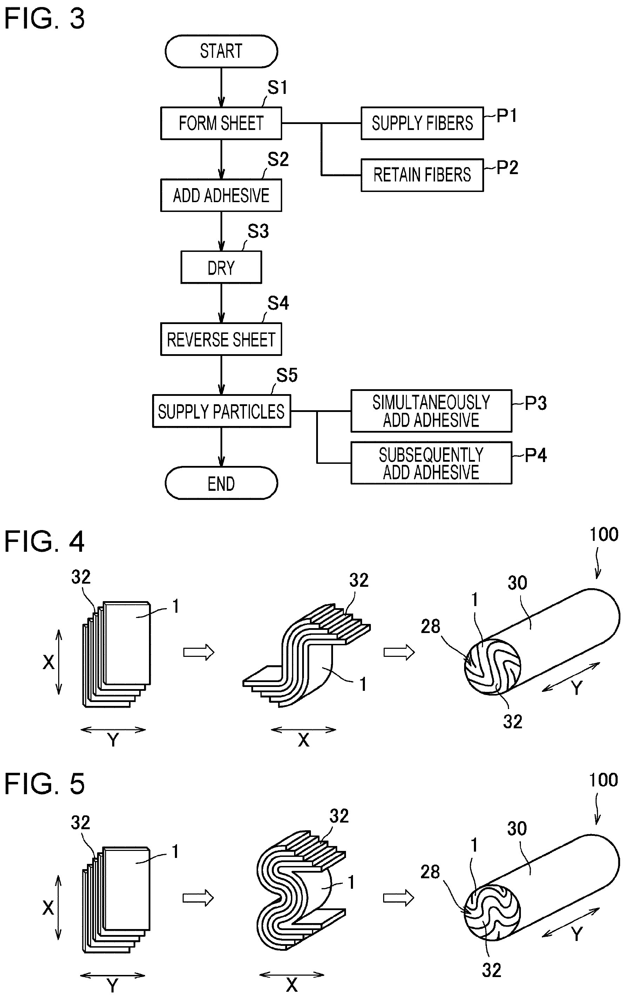

Fig. 2 schematically illustrates a manufacturing apparatus for the flavor sheet 1. Fig. 3 is a flowchart illustrating a manufacturing method for the flavor sheet 1. In Fig. 2, reference sign 8 denotes a mesh, reference signs 10 and 12 each denote a sheet conveying unit, reference sign 2 denotes a sheet including no particles, reference sign 1 denotes a flavor sheet, reference sign 14 denotes a fiber supply unit, reference sign 16 denotes an adhesive supply unit, reference sign 18 denotes a sucker, reference sign 20 denotes a dryer, reference sign 22 denotes a particle supply unit, reference sign 24 denotes an adhesive supply unit, and reference sign 26 denotes a dryer. Although Fig. 2 depicts a plurality of sheets 2, such sheets including the sheet 2 on the mesh 8 and the flavor sheet 1 may constitute one continuous sheet. The flavor sheet 1 is manufactured by using the manufacturing apparatus through an airlaid process including steps described below.

(1) Sheet Formation Step S1

Once manufacture of the flavor sheet 1 is started, at a sheet formation step S1, the fibers 6 are supplied from the fiber supply unit 14 to the mesh 8 to form the sheet 2. The fibers 6 are preferably plant-based natural fibers. The fibers 6 are preferably supplied to the mesh 8 by being dropped from the fiber supply unit 14. As the mesh 8, any mesh used for manufacture of dry nonwoven fabrics may be used without limitation. Examples of the mesh 8 include a wire mesh. More specifically, the sheet formation step S1 includes a fiber supply process P1, and a fiber retention process P2. The fiber supply process P1 involves supplying the fibers 6 from the fiber supply unit 14 to one side (specifically, the upper side) of the mesh 8 by use of gas as a medium. The fiber retention process P2 involves sucking the other side (specifically, the lower side) of the mesh 8 by means of the sucker 18 to cause the fibers to be retained on the mesh 8. Air can be used as the gas serving as a medium.

(2) Adhesive Addition Step S2

At an adhesive addition step S2, the adhesive is added from the adhesive supply unit 16 to one side A (specifically, the upper side) of the sheet 2. The adhesive may be also added, through an airlaid process of the present manufacturing process, to the other side B (specifically, the lower side) of the sheet 2 at a particle supply step S5 described later. The specific adhesive to be used at this time is as previously mentioned, and the amount of the adhesive is adjusted as appropriate. The amount of the adhesive to be added at the adhesive addition step S2 is adjusted by taking into account the amount of the adhesive that will be supplied to the side B at the particle supply step S5, so that the final amount of the adhesive in terms of solid content weight contained per unit area of the sheet 2 is about 4 to 40 g/m2.

For example, the adhesive can be added to the side A in an amount of about 2 to 20 g/m2, and at the particle supply step S5, the adhesive can be added to the side B in an amount of about 2 to 20 g/m2. Preferably, the adhesive supply unit 16 is a spray, and the adhesive is sprayed. The sheet 2 with the adhesive added thereto is delivered to the sheet conveying unit 10, and is preferably dried. The drying may be performed by using the dryer 20, or may be air-drying. As the sheet conveying unit 12, for example, a belt conveyor can be used. Through the adhesive addition step S2, the adhesive is applied to the side A, and the fibers 6 are firmly bonded together.

(3) Drying Step S3

The manufacturing method may include a drying step S3 performed at any given point. Fig. 2 depicts a case where the drying step S3 is performed, as previously mentioned, between the adhesive addition step S2 and a sheet reversal step S4 (described later) by use of the dryer 20, and a case where the drying step S3 is performed after the particle supply step S5 (described later) by use of the dryer 26. According to the present manufacturing method, at least the latter drying step S3 is performed. The drying step S3 is preferably performed for a case where a water-soluble adhesive is used at the adhesive addition step S2. The drying may be air-drying. If latex is used as the adhesive at the adhesive addition step S2, air-drying may be performed without using the dryers 20 and 26, or no drying step S3 may be provided.

### (4) Sheet Reversal Step S4

At the sheet reversal step S4, the sheet 2 obtained at the adhesive addition step S2 is reversed. More specifically, as the sheet 2 is delivered from the sheet conveying unit 10 to the sheet conveying unit 12, the sheet 2 is reversed so that the other side B faces upward.

### (5) Particle Supply Step S5

At the particle supply step S5, the particles 4 are supplied to the side B of the reversed sheet 2 to thereby form the flavor sheet 1. More specifically, the particle supply step S5 includes a simultaneous adhesive-addition process P3, which involves adding the adhesive from the adhesive supply unit 24 simultaneously with the supply of the particles 4, and a subsequent adhesive-addition process P4, which involves adding the adhesive from the adhesive supply unit 24 subsequently to the supply of the particles 4. As a result, the adhesive is added also to the side B of the sheet, and the particles 4 are thus firmly retained in the sheet 2. This completes the manufacture of the flavor sheet 1.

Fig. 2 depicts an implementation where the simultaneous adhesive-addition process P3 is performed. As with the adhesive supply unit 16, the adhesive supply unit 24 is preferably a spray. As previously mentioned, the amount of the adhesive to be added at the particle supply step S5 is adjusted so that the final solid content weight of the adhesive is about 4 to 40 g/m2. The amount of the particles is adjusted as appropriate so that a desired amount can be achieved. The flavor sheet 1 manufactured as described above includes many particles 4 present near the side A of the sheet 2.

### 3. Flavor Rod

Fig. 4 is a conceptual illustration of one implementation of a flavor rod 100. The flavor rod 100 for use in an article is prepared from the flavor sheet 1. For example, as illustrated in Fig. 4, the flavor sheets 1 that have been cut are gathered and reduced in size in a width direction X transverse to the longitudinal direction Y of the flavor sheets 1 (in other words, the direction in which each flavor sheet 1 is conveyed in Fig. 2, or the axial direction of a filler rod 28) to thereby form the filler rod 28. The flavor rod 100 can be formed by wrapping a wrapping paper 30 around the filler rod 28.

### (1) S-Shaped Cross-Section of Sheet

As illustrated in Fig. 4, the filler rod 28 is formed from a plurality of flavor sheets 1 that are overlapped with each other and then folded and reduced in size in the width direction X. Within the filler rod 28, each of the flavor sheets 1 is folded in the shape of S in sheet cross-section. The filler rod 28 includes a susceptor 32 that inductively heats the flavor sheets 1. The susceptor 32 is a heating material that converts electric energy into heat. When the susceptor 32 is placed in an electromagnetic field with the article mounted to a device, an induced current is generated.

The susceptor 32 produces heat due to an electrical resistance generated when the induced current flows. The susceptor 32 thus heats the flavor sheets 1 constituting the flavor rod 100. This causes flavor components to volatilize together with an aerosol. The susceptor 32 is, for example, in sheet form, and overlapped with the flavor sheets 1 and folded into an S-shape together with the flavor sheets 1.

### (2) ω-Shaped Cross-Section of Sheet

Fig. 5 is a conceptual illustration of another implementation of the flavor rod 100. As illustrated in Fig. 5, within the filler rod 28, each of the flavor sheets 1 may be folded in the shape of ω in sheet cross-section. In this case, the susceptor 32 is overlapped with the flavor sheets 1 and folded into the shape of ω together with the flavor sheets 1.

In either of the case in Fig. 4 and the case in Fig. 5, the susceptor 32 is preferably disposed between the flavor sheets 1, and more preferably positioned at the center of the filler rod 28. This leads to an increased area of contact between the susceptor 32 and the flavor sheets 1. Consequently, the flavor sheets 1 are heated uniformly, and volatilization of flavor components is promoted. The susceptor 32 may be in plate form, in which case the susceptor 32 is disposed at least inside the filler rod 28. In the case of an implementation where the article is to be heated by a heating method other than induction heating, no susceptor 32 is disposed in the filler rod 28.

(3) Volumetric Filling Ratio of Filler Rod

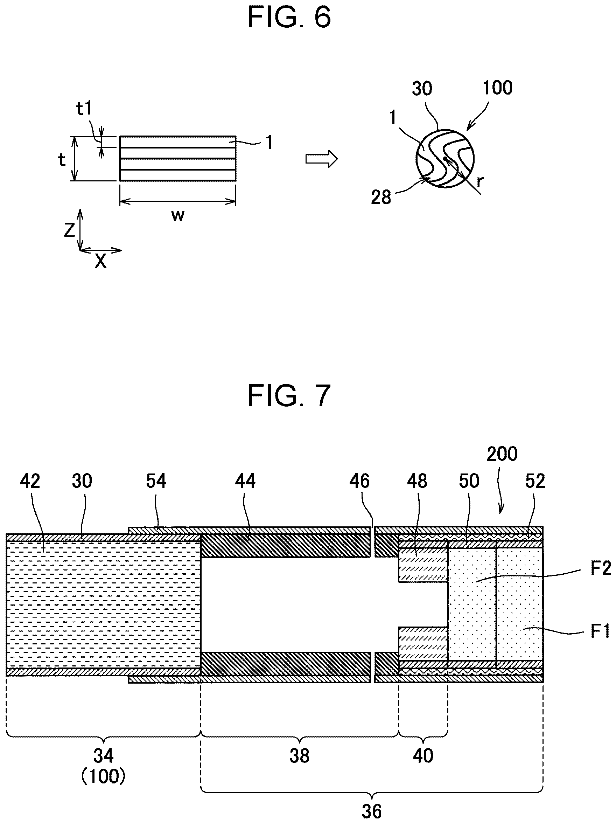

Fig. 6 is a conceptual illustration for explaining the volumetric filling ratio of the filler rod 28. Fig. 6 illustrates an implementation where the filler rod 28 includes no susceptor 32. Reference sign "t" denotes the thickness of a stack of overlapped flavor sheets 1 in the thickness direction Z prior to being formed into the filler rod 28. Reference sign "w" denotes sheet width, which is the width of each flavor sheet 1 in the width direction X prior to being formed into the filler rod 28. Reference sign "r" denotes the radius of the filler rod 28. A total sheet cross-sectional area Ss, a rod cross-sectional area Sr, and a volumetric filling ratio R of the filler rod 28 are defined as given below. In this case, the total sheet cross-sectional area Ss represents the sum of sheet cross-sectional areas in the width direction X of the flavor sheets 1. The rod cross-sectional area Sr represents the sheet cross-sectional area in the radial direction of the filler rod 28. The volumetric filling ratio R represents a ratio in percentage calculated by dividing the total sheet cross-sectional area Ss by the rod cross-sectional area Sr.

$$Ss = t \times w$$

$$Sr = r \times r \times \pi$$

$$R = (Ss/Sr) \times 100$$

Adjusting the total sheet cross-sectional area Ss and the rod cross-sectional area Sr allows the volumetric filling ratio R of the filler rod 28 to be made greater than or equal to 100%. That is, to ensure that the filler rod 28 have a volumetric filling ratio R of greater than or equal to 100%, in other words, a porosity of 0%, a thickness t1 of each single flavor sheet 1 is adjusted as appropriate to be within a range of 0.5 to 3.0 mm as previously mentioned, the number of flavor sheets 1 to be packed into the filler rod 28 is adjusted, and further, the degree of reduction in the size of the flavor sheets 1 is adjusted.

The filler rod 28 obtained as a result thus has no void. This helps to reduce variations in airflow through the filler rod 28 during inhalation that result from the presence of such voids. This in turn makes it possible to reduce fluctuations in the amount of flavor components volatilized from the flavor sheet 1, and in the amount of aerosol generation. If the susceptor 32 is included in the filler rod 28, the cross-sectional area of the susceptor 32 is taken into account in calculating the volumetric filling ratio R.

(4) Draw Resistance of Filler Rod

The draw resistance per length of 10 mm in the axial direction of the filler rod 28 is set to a range from 5 mmH$_2$O to 50 mmH$_2$O. The draw resistance of the filler rod 28 is measured in conformity with an ISO standard (ISO 6565) that specifies a method for measuring the draw resistance of filters. For example, the measurement is performed by using the "draw resistance meter A11 (from Burghart Company)." The resulting filler rod 28 has no void and exhibits an increased air permeability as compared with conventional filler rods. The flavor rod 100 made from the filler rod 28 described above is cut to form a flavor segment. The flavor segment combined with another segment such as a filter segment constitutes a non-combustion-heating-type flavor inhalation article.

4. Flavor Inhalation Article

(1) Non-Combustion-Heating-Type Flavor Inhalation Article

Fig. 7 is a cross-sectional view of one implementation of a flavor inhalation article. In Fig. 7, reference sign 200 denotes a non-combustion-heating-type flavor inhalation article. The article 200 includes a flavor segment 34, and a mouthpiece segment 36. The mouthpiece segment 36 includes a cooling segment 38, a center-hole segment 40, a first filter segment F1, and a second filter segment F2. The first filter segment F1 and the second filter segment F2 are herein also collectively referred to as "filter part." For inhalation on the article 200, the flavor segment 34 is heated, and inhalation is performed at the end of the first filter segment F1. Although the susceptor 32 is not depicted in Fig. 7, if the susceptor 32 is provided, then the flavor segment 34 is inductively heated with the susceptor 32.

The flavor segment 34 is formed by cutting the flavor rod 100. The flavor segment 34 includes a sheet-filled part 42 formed by the filler rod 28, and the wrapping paper 30 mentioned above that covers the sheet-filled part 42 and that has a tubular shape. The sheet-filled part 42 includes an aerosol-source material, and may further include volatile flavoring agent components and water. The tobacco used to obtain a tobacco extract or ground tobacco, which is included in the particles of the sheet-filled part 42, comes in various types. Flue-cured, burley, oriental, and native species, and other Nicotiana tabacum varieties or Nicotiana rustica varieties can be blended as appropriate and used to obtain a desired flavor.

The aerosol-source material is a material capable of generating an aerosol when heated. The aerosol-source material to be used is not particularly limited. Examples of the aerosol-source material include glycerine, propylene glycol (PG), triethyl citrate (TEC), triacetin, and 1,3-butanediol. One kind of these materials may be used alone, or two or more kinds thereof may be used in combination.

Although the type of volatile flavoring agent components to be used is not particularly limited, from the viewpoint of imparting a good flavor, suitable examples include acetanisole, acetophenone, acetylpyrazine, 2-acetylthiazole, alfalfa extract, amyl alcohol, amyl butyrate, trans-anethole, star anise oil, apple juice, Peru balsam oil, beeswax absolute, benzaldehyde, benzoin resinoid, benzyl alcohol, benzyl benzoate, benzyl phenylacetate, benzyl propionate, 2,3-butanedione, 2-butanol, butyl butyrate, butyric acid, caramel, cardamom oil, carob absolute, β-carotene, carrot juice, L-carvone, β-caryophyllene, cassia bark oil, cedarwood oil, celery seed oil, chamomile oil, cinnamaldehyde, cinnamic acid, cinnamyl alcohol, cinnamyl cinnamate, citronella oil, DL-citronellol, clary sage extract, cocoa, coffee, cognac oil, coriander oil, cuminaldehyde, davana oil, δ-decalactone, γ-decalactone, decanoic acid, dill oil, 3,4-dimethyl-1,2-cyclopentanedione, 4,5-dimethyl-3-hydroxy-2,5-dihydrofuran-2-one, 3,7-dimethyl-6-octenoic acid, 2,3-dimethylpyrazine, 2,5-dimethylpyrazine, 2,6-dimethylpyrazine, ethyl 2-methylbutyrate, ethyl acetate, ethyl butyrate, ethyl hexanoate, ethyl isovalerate, ethyl lactate, ethyl laurate, ethyl levulinate, ethyl maltol, ethyl octanoate, ethyl oleate, ethyl palmitate, ethyl phenylacetate, ethyl propionate, ethyl stearate, ethyl valerate, ethyl vanillin, ethyl vanillin glucoside, 2-ethyl-3,(5 or 6)-dimethylpyrazine, 5-ethyl-3-hydroxy-4-methyl-2(5H)-furanone, 2-ethyl-3-methylpyrazine, eucalyptol, fenugreek absolute, genet absolute, gentian root infusion, geraniol, geranyl acetate, grape juice, guaiacol, guava extract, γ-heptalactone, γ-hexalactone, hexanoic acid, cis-3-hexen-1-ol, hexyl acetate, hexyl alcohol, hexyl phenylacetate, honey, 4-hydroxy-3-pentenoic acid lactone, 4-hydroxy-4-(3-hydroxy-1-butenyl)-3,5,5-trimethyl-2-cyclohexen-1-one, 4-(p-hydroxyphenyl)-2-butanone, 4-hydroxyundecanoic acid sodium salt, immortelle absolute, β-ionone, isoamyl acetate, isoamyl butyrate, isoamyl phenylacetate, isobutyl acetate, isobutyl phenylacetate, jasmine absolute, kola nut tincture, labdanum oil, terpeneless lemon oil, licorice extract, linalool, linalyl acetate, lovage root oil, maltol, maple syrup, menthol, menthone, L-menthyl acetate, p-methoxybenzaldehyde, methyl-2-pyrrolyl ketone, methyl anthranilate, methyl phenylacetate, methyl salicylate, 4'-methylacetophenone, methyl cyclopentenolone, 3-methylvaleric acid, mimosa absolute, molasses, myristic acid, nerol, nerolidol, γ-nonalactone, nutmeg oil, δ-octalactone, octanal, octanoic acid, orange flower oil, orange oil, orris root oil, palmitic acid, ω-pentadecalactone, peppermint oil, petitgrain Paraguay oil, phenethyl alcohol, phenethyl phenylacetate, phenylacetic acid, piperonal, plum extract, propenylguaethol, propyl acetate, 3-propylidenephthalide, prune juice, pyruvic acid, raisin extract, rose oil, rum, sage oil, sandalwood oil, spearmint oil, styrax absolute, marigold oil, tea distillate, α-terpineol, terpinyl acetate, 5,6,7,8-tetrahydroquinoxaline, 1,5,5,9-tetramethyl-13-oxatricyclo(8.3.0.0.(4.9))tridecane, 2,3,5,6-tetramethylpyrazine, thyme oil, tomato extract, 2-tridecanone, triethyl citrate, 4-(2,6,6-trimethyl-1-cyclohexenyl)2-buten-4-one, 2,6,6-trimethyl-2-cyclohexene-1,4-dione, 4-(2,6,6-trimethyl-1,3-cyclohexadienyl)2-buten-4-one, 2,3,5-trimethylpyrazine, γ-undecalactone, γ-valerolactone, vanilla extract, vanillin, veratraldehyde, violet leaf absolute, and extracts of tobacco plants (tobacco leaf, tobacco stem, tobacco flower, tobacco root, and tobacco seed). Among these, menthol is particularly preferred. One kind of these volatile flavoring agent components may be used alone, or two or more kinds thereof may be used in combination.

The content of the aerosol-source material in the sheet-filled part 42 is not particularly limited. From the viewpoint of allowing sufficient aerosol generation as well as imparting a good flavor, the above-mentioned content is normally 5 to 50% by weight, and preferably 10 to 20% by weight. If the sheet-filled part 42 contains volatile flavoring agent components, the content of the volatile flavor components is not particularly limited. From the viewpoint of imparting a good flavor, with respect to the weight of the sheet-filled part 42, the above-mentioned content is normally greater than or equal to 100 ppm, preferably greater than or equal to 10000 ppm, and more preferably greater than or equal to 25000 ppm, and is normally less than or equal to 100000 ppm, preferably less than or equal to 50000 ppm, and more preferably less than or equal to 33000 ppm.

As the sheet-filled part 42 is heated, flavor components, the aerosol-source material, and water contained in the sheet-filled part 42 are vaporized and, upon inhalation, move to the mouthpiece segment 36. The cooling segment 38 is formed by a tubular member 44. The tubular member 44 is, for example, a paper tube obtained by forming a piece of cardboard into a cylindrical shape. The tubular member 44, and a mouthpiece lining paper 54 (described later) are each provided with a perforation 46 that extends therethrough.

Due to the presence of the perforation 46, outside air is introduced into the cooling segment 38 upon inhalation. As a result, vaporized aerosol components generated by heating of the flavor segment 34 come into contact with the outside air. As the vaporized aerosol components thus decrease in temperature and liquefy, an aerosol is generated. The diameter (span length) of the perforation 46 is not particularly limited. For example, the diameter can be 0.5 to 1.5 mm. The number of perforations 46 is not particularly limited, and may be one, or two or more. A plurality of perforations 46 may be provided on the periphery of the cooling segment 38.

The center-hole segment 40 includes a filler layer 48 having a hollow portion, and an inner plug wrapper 50 that covers the filler layer 48. The center-hole segment 40 serves to increase the strength of the mouthpiece segment 36. The filler layer 48 is, for example, a rod with an inside diameter of φ5.0 to φ1.0 mm that is filled with cellulose acetate fibers at a high density, and hardened with a plasticizer containing triacetin that has been added thereto in an amount of 6 to 20% by weight based on the weight of the cellulose acetate.

In the filler layer 48, the fibers are packed at a high density. This means that upon inhalation, air or an aerosol flows only in the hollow portion, and hardly flows into the filler layer 48. When it is desired to mitigate a decrease of aerosol components due to filtration in the filter part, it is effective, from the viewpoint of increasing the amount of delivery of aerosol components, to shorten the filter part to allow replacement with the center-hole segment 40. Since the filler layer 48 inside the center-hole segment 40 is a fiber-filled layer, the filler layer 48 ensures a pleasant tactile feel when touched from the outside during use.

The center-hole segment 40 and the filter part are connected by an outer plug wrapper 52. The outer plug wrapper 52 is in the form of, for example, cylindrical paper. The mouthpiece lining paper 54 connects the following segments: the sheet-filled part 42; the cooling segment 38; and the center-hole segment 40 and the filter part that have been connected with each other. The above-mentioned three segments can be connected by, for example, applying an adhesive such as a vinyl acetate-based adhesive to the inner face of the mouthpiece lining paper 54, placing the three segments inside the mouthpiece lining paper 54, and then wrapping the mouthpiece lining paper 54.

Although the length of the article 200 in the axial direction, that is, the horizontal direction in Fig. 7 is not particularly limited, the length is preferably 40 to 90 mm, more preferably 50 to 75 mm, and further preferably 50 to 60 mm. The circumferential length of the article 200 is preferably 16 to 25 mm, more preferably 20 to 24 mm, and further preferably 21 to 23 mm.

In an exemplary implementation, the flavor segment 34 has a length of 20 mm, the cooling segment 38 has a length of 20 mm, the center-hole segment 40 has a length of 6 mm, and the first filter segment F1 and the second filter segment F2 each have a length of 7.0 mm. The lengths of these individual segments can be changed as appropriate in accordance with manufacturing suitability, required quality, or other factors. Further, only the filter part may be disposed downstream of the cooling segment 38 with no center-hole segment 40 provided.

(2) Flavor Inhalation System

The article 200, which is of a non-combustion-heating-type, is preferably used in combination with a device that heats the article 200. This combination is referred to also as non-combustion-heating-type tobacco flavor inhalation system. A known device can be used as the above-mentioned device. The device preferably includes, for example, an electrical-resistance heater. If the flavor segment 34 includes the susceptor 32, mounting the article 200 to the device causes an induced current to flow in the susceptor 32. The article 200 is heated due to an electrical resistance generated when the induced current flows.

As has been described in the foregoing, the flavor rod 100 according to the embodiment includes the filler rod 28, and the wrapping paper 30. The filler rod 28 is formed from the flavor sheet 1 that is gathered and reduced in size in the width direction X. The wrapping paper 30 is wrapped around the filler rod 28. The flavor sheet 1 includes the sheet 2, the adhesive, and the particles 4. The sheet 2 is formed from the fibers 6. The adhesive is added to one side A of the sheet 2. The particles 4 are supplied to the other side B of the sheet 2. The flavor sheet 1 is formed from a nonwoven fabric through formation of the sheet 2, addition of the adhesive, and supply of the particles 4 that have been performed by an airlaid process. The flavor inhalation article 200 employing the flavor rod 100 formed from the flavor sheet 1 makes it possible to supply flavor components to the user efficiently and in a consistent amount.

More specifically, the flavor sheet 1 is formed from a dry nonwoven fabric. Accordingly, the sheet 2 has a low density, a large thickness, and a high air permeability as compared with conventional sheets. The article 200 employing the flavor rod 100 formed from the flavor sheet 1 described above has a significantly reduced draw resistance. This makes it possible to, upon inhalation on the article 200, efficiently volatilize flavor components contained in the flavor sheet 1, and efficiently generate an aerosol containing the flavor components.

The reduced draw resistance of the article 200 makes it possible to reduce the amount of flavor components adsorbed and filtered by the flavor rod 100 itself. Therefore, even with the article 200 of a non-combustion-heating-type, which allows only a relatively small amount of flavor components to be contained therein, a satisfying flavor can be supplied to the user.

Further, the flavor sheet 1 is formed from a nonwoven fabric through formation of the sheet 2, addition of the adhesive, and supply of the particles 4 that have been performed by an airlaid process. This makes it possible to eliminate voids in the filler rod 28 formed by being filled with the flavor sheet 1. This promotes efficient volatilization of flavor components, and efficient aerosolization of flavor components. This in turn allows for efficient supply of flavor to the user.

The absence of voids in the filler rod 28, and the low density of the sheet 2 and the large thickness of the sheet 2 lead to reduced variations in the degree of packing of the flavor sheet 1 in the filler rod 28 and therefore in the flavor rod 100. This makes it possible to reduce fluctuations in the amount of flavor components volatilized from the flavor sheet 1 in the flavor rod 100, and in the amount of aerosol generation. This in turn makes it possible to supply a consistent flavor to the user.

Further, the adhesive is added also to the other side B of the sheet 2 through the airlaid process. More specifically, at the simultaneous adhesive-addition process P3 or the subsequent adhesive-addition process P4 of the particle supply step S5, the adhesive is added to the side B of the sheet. This allows for increased tensile strength of the sheet 2, and also allows for more reliable retention of the particles 4 in the sheet 2.

The flavor sheet 1 has a thickness of 0.5 mm to 3.0 mm. Use of the sheet 2 that is thicker than conventional sheets as described above makes it possible to reliably form the flavor sheet 1 including the sheet 2 with a decreased density and an increased air permeability. More specifically, the flavor sheet 1 preferably has an air permeability of 1000 l/m$^2$/s to 50000 l/m$^2$/s. This makes it possible to efficiently volatilize flavor components contained in the flavor sheet 1, and efficiently generate an aerosol containing the flavor components.

With the total sheet cross-sectional area Ss, the rod cross-sectional area Sr, and the volumetric filling ratio R being defined as previously mentioned, the volumetric filling ratio R of the filler rod 28 is greater than or equal to 100%. This makes it possible to reliably form the filler rod 28 having no void. Consequently, during inhalation on the article 200, variations in airflow through the filler rod 28 that result from the presence of such voids are reduced. This in turn makes it possible to reduce fluctuations in the amount of flavor components volatilized from the flavor sheet 1, and in the amount of aerosol generation.

More specifically, the filler rod 28 has a draw resistance of 5 mmH$_2$O to 50 mmH$_2$O per length of 10 mm in the axial direction Y. The flavor rod 100 including the filler rod 28 described above has a significantly reduced draw resistance. This makes it possible to, upon inhalation on the article 200, efficiently volatilize flavor components contained in the flavor sheet 1, and efficiently generate an aerosol containing the flavor components.

The filler rod 28 is formed from a plurality of flavor sheets 1 that are overlapped with each other and then folded and reduced in diameter in the width direction. Each of the flavor sheets 1 is folded in the shape of S or ω in sheet cross-section. Folding each flavor sheet 1 into such a curved shape makes it possible to easily increase the volumetric filling ratio R of the filler rod 28 to be greater than or equal to 100%. This allows voids in the filler rod 28 to be eliminated with further improved reliability.

The filler rod 28 includes the susceptor 32 that inductively heats the flavor sheet 1. As previously mentioned, variations in the degree of packing of the flavor sheet 1 in the flavor rod 100 are reduced. This means that when the susceptor 32 is disposed in the flavor rod 100, variations in the manner of contact between the flavor sheet 1 and the susceptor 32 are also reduced. This makes it possible to reduce fluctuations in the amount of volatilization of flavor components and therefore in the amount of aerosol generation that are associated with fluctuations in the heating distribution of the susceptor 32. This in turn allows for further stabilization of the flavor supplied to the user.

The particles 4 to be supplied to the sheet 2 preferably have a particle size of 14 mesh to 70 mesh. If the particles to be supplied to the sheet 2 are supplied in paste form to the fibers 6, the particles 4 are preferably in the form of powder with a particle size of 70 mesh to 500 mesh. This allows the particles 4 to be reliably embedded and retained in the sheet 2.

The particles 4 to be supplied to the sheet 2 preferably include ground tobacco or a tobacco extract. This ensures that even with the flavor inhalation article 200 of a non-combustion-heating-type, which allows only a relatively small amount of flavor components to be contained therein, an even more satisfying flavor can be supplied to the user. The fibers 6 used for the flavor sheet 1 are preferably plant-based natural fibers. This allows for reduced environmental load of the flavor sheet 1.

The adhesive to be added to the sheet 2 is preferably in the form of a suspension in water of a mixture of polyvinyl alcohol and vinyl acetate-acrylic copolymer. This makes it possible to more effectively increase the tensile strength of the sheet 2, and also more reliably allows the particles 4 to be retained in the sheet 2.

Although the above completes the description of the embodiment, the embodiment described above is not intended to be restrictive but can be modified in various ways without departing from the scope thereof. For example, the above-mentioned manufacturing apparatus for the flavor sheet 1 is illustrative of one implementation, and the configuration of the apparatus is not limited to the details described herein as long as such an apparatus allows the flavor sheet 1 to be manufactured through the airlaid process mentioned above. The flavor sheet 1 according to the embodiment is not limited for use in the above-mentioned flavor rod 100 and the above-mentioned flavor inhalation article 200 employing the flavor rod 100, but can be used in various implementations.

In one possible exemplary implementation, the flavor sheet 1 is laid flat to form the flavor segment 34 that is in sheet form, and the flavor segment 34 is laminated with another segment or with the susceptor 32 that is in sheet form to thereby manufacture the flavor inhalation article 200 that is of a laminated type. The flavor rod 100 according to the embodiment can be used not only for the flavor inhalation article 200 configured as described above, but also for the flavor inhalation article 200 implemented in various other forms.

Reference Signs List

1 flavor sheet
2 sheet
4 particles
6 fibers
28 filler rod
30 wrapping paper
32 susceptor
100 flavor rod
200 flavor inhalation article
A one side of sheet
B other side of sheet
Ss total sheet cross-sectional area
Sr rod cross-sectional area
R volumetric filling ratio
X width direction
Y longitudinal direction, axial direction

**Claims**

1. A flavor rod for use in a non-combustion-heating-type flavor inhalation article, the flavor rod comprising:

   a filler rod formed from a flavor sheet that is gathered and reduced in size in a width direction transverse to a longitudinal direction of the flavor sheet; and
   a wrapping paper that is wrapped around the filler rod,
   wherein the flavor sheet includes a sheet, an adhesive, and particles, the sheet being formed from fibers, the adhesive being added to a side of the sheet, the particles being supplied to an other side of the sheet, the flavor sheet being formed from a nonwoven fabric through formation of the sheet, addition of the adhesive, and supply of the particles that are performed by an airlaid process.

2. The flavor rod according to claim 1, wherein the flavor sheet includes the adhesive added also to the other side of the sheet by the airlaid process.

3. The flavor rod according to claim 1 or 2, wherein the flavor sheet has a thickness of 0.5 mm to 3.0 mm.

4. The flavor rod according to any one of claims 1 to 3, wherein the flavor sheet has an air permeability of 1000 l/m$^2$/s to 50000 l/m$^2$/s.

5. The flavor rod according to any one of claims 1 to 4, wherein when a sum of sheet cross-sectional areas in the width direction of the flavor sheet is defined as a total sheet cross-sectional area, a sheet cross-sectional area in a radial direction of the filler rod is defined as a rod cross-sectional area, and a volumetric filling ratio of the filler rod is defined as a ratio in percentage calculated by dividing the total sheet cross-sectional area by the rod cross-sectional area, the volumetric filling ratio is greater than or equal to 100%.

6. The flavor rod according to any one of claims 1 to 5, wherein the filler rod has a draw resistance of 5 mmH$_2$O to 50 mmH$_2$O per length of 10 mm in an axial direction of the filler rod.

7. The flavor rod according to any one of claims 1 to 6,

   wherein the filler rod is formed from a plurality of the flavor sheets that are overlapped with each other and are folded and reduced in size in the width direction, and
   wherein each of the flavor sheets is folded in a shape of S in sheet cross-section.

8. The flavor rod according to any one of claims 1 to 6,

   wherein the filler rod is formed from a plurality of the flavor sheets that are overlapped with each other and are folded and reduced in size in the width direction, and
   wherein each of the flavor sheets is folded in a shape of ω in sheet cross-section.

9. The flavor rod according to any one of claims 1 to 8, wherein the filler rod includes a susceptor that inductively heats the flavor sheet.

10. The flavor rod according to any one of claims 1 to 9, wherein the particles have a particle size of 14 mesh to 70 mesh.

11. The flavor rod according to any one of claims 1 to 9, wherein the particles have a particle size of 70 mesh to 500 mesh.

12. The flavor rod according to any one of claims 1 to 11, wherein the particles include ground tobacco.

13. The flavor rod according to any one of claims 1 to 12, wherein the particles include a tobacco extract.

14. The flavor rod according to any one of claims 1 to 13, wherein the fibers are plant-based natural fibers.

15. The flavor rod according to any one of claims 1 to 14, wherein the adhesive is a suspension in water of a mixture of polyvinyl alcohol and vinyl acetate-acrylic copolymer.

# FIG. 1

# FIG. 2

## FIG. 3

## FIG. 4

## FIG. 5

# FIG. 6

# FIG. 7

## INTERNATIONAL SEARCH REPORT

| International application No. |
|---|
| **PCT/JP2022/015864** |

**A. CLASSIFICATION OF SUBJECT MATTER**

*A24D 1/20*(2020.01)i
FI:   A24D1/20

According to International Patent Classification (IPC) or to both national classification and IPC

**B. FIELDS SEARCHED**

Minimum documentation searched (classification system followed by classification symbols)

A24D1/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/234915 A1 (JAPAN TOBACCO INC.) 26 November 2020 (2020-11-26) entire text, all drawings | 1-15 |
| A | WO 2020/230577 A1 (JAPAN TOBACCO INC.) 19 November 2020 (2020-11-19) entire text, all drawings | 1-15 |
| A | JP 2021-48867 A (TOA INDUSTRY CO., LTD.) 01 April 2021 (2021-04-01) entire text, all drawings | 1-15 |
| A | JP 6929300 B2 (PHILIP MORRIS PRODUCTS S.A.) 01 September 2021 (2021-09-01) entire text, all drawings | 1-15 |
| A | JP 6946306 B2 (SWM LUXEMBOURG SARL) 06 October 2021 (2021-10-06) entire text, all drawings | 1-15 |
| A | JP 2021-519604 A (KT&G CORP.) 12 August 2021 (2021-08-12) entire text, all drawings | 1-15 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 June 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 501 141 A1**

| INTERNATIONAL SEARCH REPORT<br>Information on patent family members | | | | International application No.<br>**PCT/JP2022/015864** | |
|---|---|---|---|---|---|

| Patent document<br>cited in search report | | | Publication date<br>(day/month/year) | Patent family member(s) | Publication date<br>(day/month/year) |
|---|---|---|---|---|---|
| WO | 2020/234915 | A1 | 26 November 2020 | (Family: none) | |
| WO | 2020/230577 | A1 | 19 November 2020 | (Family: none) | |
| JP | 2021-48867 | A | 01 April 2021 | US 2021/0127734 A1<br>entire text, all drawings<br>WO 2019/189523 A1<br>EP 3777581 A1<br>CN 111885931 A<br>KR 10-2020-0132879 A | |
| JP | 6929300 | B2 | 01 September 2021 | US 2019/0133174 A1<br>entire text, all drawings<br>WO 2017/203016 A1<br>EP 3462922 A1<br>CN 109152407 A<br>KR 10-2019-0011231 A | |
| JP | 6946306 | B2 | 06 October 2021 | US 2019/0380377 A1<br>entire text, all drawings<br>WO 2017/051034 A1<br>EP 3352590 A1<br>KR 10-2018-0081502 A<br>CN 108471802 A | |
| JP | 2021-519604 | A | 12 August 2021 | US 2021/0227876 A1<br>entire text, all drawings<br>WO 2020/009416 A1<br>EP 3818840 A1<br>KR 10-2020-0005076 A<br>CN 112055545 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6929300 B
- JP 6946306 B
- JP 2021181327 A
- JP 2015177252 A
- JP 2021519604 W